# FASCICULE DE BREVET EUROPEEN

(11) **EP 2 222 579 B1**
(45) Date de publication et mention de la délivrance du brevet: **08.06.2011**
(21) Numéro de dépôt: 08862923.3
(22) Date de dépôt: 17.12.2008
(51) Int. Cl.: B65G 21/20, B65G 47/54

(54) **DISPOSITIF DE RECEPTION ET TRANSPORT**
EMPFANGS- UND TRANSPORTVORRICHTUNG
RECEIVING AND CONVEYING DEVICE

(30) Priorité: 17.12.2007 BE 200700599
(43) Date de publication de la demande: 01.09.2010
(73) Titulaire: Visar, 1150 Bruxelles (BE)
(72) Inventeur: KLEYNEN, Olivier, 1150 Bruxelles (BE)
(74) Mandataire: Luys, Marie-José A.H.
(86) Numéro de dépôt international: PCT/EP2008/067698
(87) Numéro de publication internationale: WO 2009/077552

(56) Documents cités:
- EP-A- 1 099 632
- WO-A-2006/125443
- DE-A1- 3 238 683
- DE-A1- 10 345 613
- FR-A- 2 682 941
- GB-A- 1 276 361
- GB-A- 2 037 186
- JP-A- 61 111 221
- JP-A- 2004 075 380
- JP-A- 2005 060 102

## Description

La présente invention se rapporte à un dispositif de réception d'objets tombants et de transport desdits objets dans une direction sensiblement différente à la verticale, de préférence à haute vitesse, comportant un ensemble de bandes transporteuses dans la direction de transport. Un tel dispositif est connu du document GB 1 276 361.

Lorsque des objets impactent sur une bande transporteuse avec une certaine vitesse perpendiculaire à la surface de ladite bande, ces objets peuvent rebondir, ce qui présente des inconvénients sérieux dans certaines applications, et en particulier lorsqu'il est impératif d'éviter que des tels objets reçus sur la bande avec certains intervalles temporels et/ou spatiaux ne se chevauchent.

Ce problème se pose en particulier dans certaines unités de tri, et en particulier dans certaines unités de tri de fruits ou légumes, tels que, par exemple, des carottes. De telles unités de tri comportent normalement un convoyeur à rouleaux rotatifs orienté dans une première direction, et une bande transporteuse orientée dans une deuxième direction sensiblement perpendiculaire à la première direction. La bande transporteuse est placée en aval et au dessous du convoyeur à rouleaux rotatifs, de manière à ce que des objets convoyés d'abord dans la première direction et à une première vitesse sur le convoyeur à rouleaux, tombent ensuite sur le dispositif de transport pour être transportés dans une deuxième direction sensiblement perpendiculaire à la première direction et avec une vitesse sensiblement supérieure à la première vitesse. Les objets convoyés dans le convoyeur à rouleaux se logent dans des concavités délimitées par des rouleaux adjacents, de manière à orienter chaque objet et/ou aligner une pluralité d'objets dans la deuxième direction. Les objets alignés et/ou orientés dans la deuxième direction tombent donc sur la bande transporteuse de manière à être transportés en file indienne dans cette deuxième direction pour leur tri individuel manuel et/ou automatique.

Toutefois, avec la force de la chute, les objets peuvent rebondir, perdant leur orientation et/ou alignement, et/ou se chevauchant les uns sur les autres, ce qui peut compliquer leur tri, en particulier leur tri automatique.

Il a été proposé d'équiper de telles bandes transporteuses de dispositifs d'amortissement en dessous de la surface de la bande, comme par exemple dans la demande de brevet japonais JP 2005-060102. Toutefois, ces dispositifs sont seulement moyennement effectifs pour éviter le rebondissement des objets tombant sur la bande transporteuse et présentent en outre d'autres inconvénients tels que le poids et la complexité mécanique.

Afin de résoudre ce problème, le dispositif de l'invention comporte au moins une rangée, sensiblement parallèle à la direction de transport, d'éléments flexibles attachés à côté et à une certaine distance au-dessus de ladite au moins une bande transporteuse, et inclinés vers le bas, de manière à présenter une moindre résistance mécanique vers le bas que vers le haut, chaque rangée d'éléments flexibles étant fixée sur une courroie de transport.

Les éléments flexibles forment donc une sorte de clapet anti-retour pour les objets tombant sur la bande transporteuse, les laissant facilement arriver sur la bande, mais empêchant leur rebondissement dans le sens opposé, la résistance mécanique des éléments flexibles s'adaptant à la longueur, et donc indirectement à la masse, de chaque objet tombant, et les éléments flexibles pouvant se déplacer avec l'objet pendant son transport sur la bande transporteuse, évitant donc de les freiner. Pour cette dernière raison, il est donc aussi avantageux que cette courroie de transport soit synchronisée avec l'ensemble de bandes transporteuses.

De préférence, chaque rangée comporte des éléments flexibles de plusieurs longueurs. De cette manière, le dispositif peut empêcher le rebond d'objets avec une variété de diamètres.

De préférence, le dispositif comporte au moins une desdites rangées d'éléments flexibles de chaque côté de l'ensemble de bandes transporteuses, et ceci aussi pour une plus grande efficacité contre le rebond.

De préférence, afin d'éviter encore mieux le rebond des objets tombants, ainsi que d'éviter le déplacement latéral des objets pendant leur transport, ledit ensemble de bandes transporteuses comporte au moins deux bandes transporteuses parallèles et inclinées latéralement l'une vers l'autre en forme de V.

L'invention se rapporte aussi à une unité de tri comportant :
- un convoyeur à rouleaux rotatifs orienté dans une première direction, et
- un dispositif de réception et de transport suivant l'invention, placé, avec une direction de transport sensiblement perpendiculaire à ladite première direction, en aval et au dessous dudit convoyeur.

Une telle unité de tri permet donc de présenter un par un des objets sensiblement alignés et orientés dans une seule direction pour leur inspection et aiguillage.

Lorsqu'un ensemble d'objets de différents diamètres sont alignés entre les mêmes deux rouleaux, il est possible que, en fin de course du convoyeur, les objets de plus grand diamètre tombent avant la chute de ceux de plus petit diamètre, ce qui peut provoquer que des objets de différents diamètres se chevauchent. Afin d'assurer que tout un ensemble d'objets alignés par le convoyeur tombe simultanément ou presque sur le dispositif de réception et transport, et éviter de tels chevauchements, il est donc préférable que l'unité de tri comporte en outre une flasque oscillo-battante entre ledit convoyeur et ledit dispositif, synchronisée avec ledit convoyeur afin de sensiblement simultanément laisser tomber sur ledit dispositif toute une rangée d'objets alignés par le convoyeur.

De préférence, afin de pousser les objets convoyés dans les interstices entre rouleaux adjacents, ledit convoyeur à rouleaux rotatifs comporte au moins une flasque flexible, de préférence en matière plastique, disposée au-dessus des rouleaux du convoyeur et orientée sensiblement perpendiculairement à ladite première direction.

De préférence, pour faciliter l'inspection automatique des objets, l'unité de tri comporte en outre des capteurs pour l'inspection de paramètres physiques et/ou chimiques d'objets transportés par ledit dispositif. De tels capteurs pourraient être, par exemple, des capteurs optiques, mais aussi, alternativement ou complémentairement, d'autres types de capteurs.

De préférence, pour faciliter l'aiguillage automatique des objets après inspection, l'unité de tri peut comporter en outre des moyens d'aiguillage d'objets transportés par ledit dispositif. Des tels moyens d'aiguillage peuvent comporter, par exemple, une porte, trappe ou flasque, ou bien un déflecteur ou guide, avec un actionnement par des moyens mécaniques, électriques et/ou fluidiques.

Des détails concernant un mode de réalisation particulier de l'invention sont décrits ci-après, de manière illustrative, mais non restrictive, faisant référence aux dessins.
La figure 1 montre une vue transversale schématique d'une unité de tri suivant un mode de réalisation de l'invention,
la figure 1a est une vue transversale schématique d'un dispositif de réception et transport dans l'unité de tri de la figure 1 pendant le transport d'un objet, et
la figure 2 montre une vue schématique d'en haut du dispositif de réception et transport illustré dans la figure 1 a.

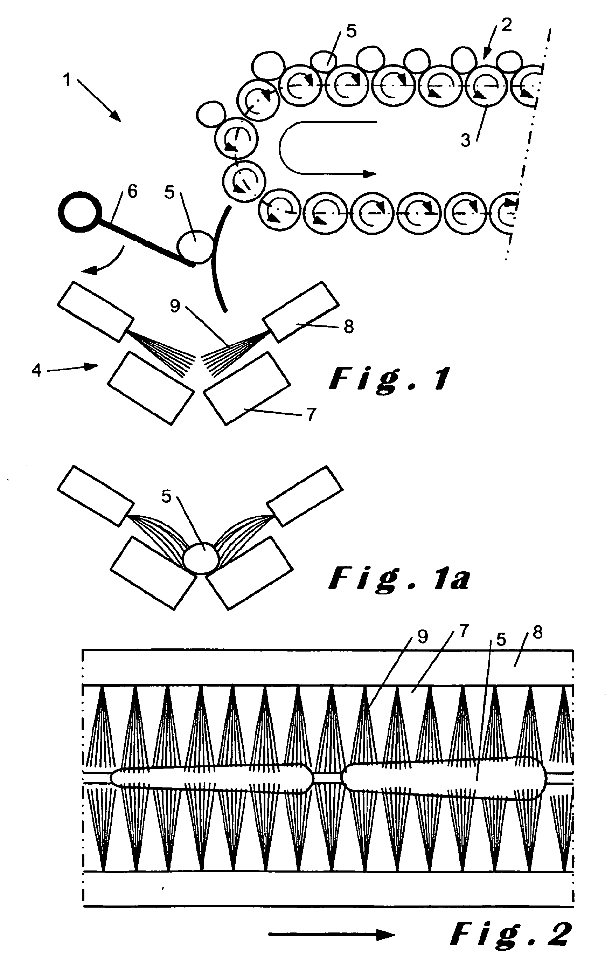

Dans la figure 1 est illustrée une unité de tri 1 suivant un mode de réalisation de l'invention. L'unité de tri 1 illustrée est particulièrement utile pour le tri de légumes allongés, tels que par exemple des carottes. Il est toutefois évident que la personne du métier pourrait appliquer les principes de l'invention dans d'autres domaines, tant dans le secteur agroalimentaire comme dans d'autres secteurs.

L'unité de tri 1 illustrée comporte un convoyeur 2 à rouleaux 3 orienté dans une première direction, un dispositif 4 placé en aval et en dessous du convoyeur 2 pour recevoir les objets 5 tombant en fin de course du convoyeur 2 et les transporter dans une direction sensiblement perpendiculaire à ladite première direction, et une flasque oscillo-battante 6 placée entre ledit convoyeur 2 et ledit dispositif 4 de réception et de transport des objets 5. Dans le mode de réalisation préféré pour le tri de carottes, ladite flasque oscillo-battante 6 est placée à environ 15 cm au-dessus du dispositif 4.

Dans le mode de réalisation illustré dans la figure 1, le dispositif 4 comporte deux bandes transporteuses 7 parallèles et inclinées latéralement l'une vers l'autre en forme de V. Les bandes transporteuses 7 sont couplées, de manière à se déplacer à sensiblement la même vitesse. Les bandes transporteuses 7 sont de préférence en matériau élastomère, tel que, par exemple, le matériau commercialisé sous la marque Linatex®. En outre, le dispositif 4 comporte aussi une courroie-brosse 8 de chaque côté des bandes transporteuses 7. Les courroies-brosses 8 sont aussi couplées aux bandes transporteuses 7 pour se déplacer à sensiblement la même vitesse que celles-ci.

Comme on peut voir sur la Figure 2, une pluralité de brosses 9 inclinées vers le bas est arrangée sur chaque courroie-brosse 8 dans au moins une rangée sensiblement parallèle à la direction de transport des deux bandes transporteuses 7, et à une certaine distance au-dessus desdites deux bandes transporteuses 7. Chaque courroie-brosse 8 comporte des brosses 9 de plusieurs longueurs.

En fonctionnement, les rouleaux 3 avancent dans une première direction vers le dispositif 4, tout en tournant autour de leurs propres axes. De préférence, le sens de rotation de chaque rouleau 3 s'inverse de façon périodique, par exemple lorsque chaque rouleau 3 se déplace d'une distance correspondant à trois diamètres de rouleau. Des objets 5 convoyés par ledit convoyeur 2 se logent ainsi dans les interstices entre des rouleaux 3 adjacents. Si ces objets 5 sont allongés, ils s'orienteront ainsi dans une direction sensiblement perpendiculaire à la direction de convoyage. Aussi, si la largeur du convoyeur, c'est-à-dire la longueur des rouleaux 3, le permet, plusieurs objets 5 pourront s'aligner dans chaque interstice entre deux rouleaux 3, formant des rangées d'objets 5 dans une direction sensiblement perpendiculaire à celle de convoyage. Afin de faciliter l'alignement et/ou orientation des objets en forçant les objets 5 à se loger dans lesdits interstices, le convoyeur 2 peut aussi comporter des flasques flexibles (non illustrées) placées sensiblement perpendiculairement à la direction de convoyage, au-dessus des rouleaux 3. Ces flasques flexibles peuvent être, par exemple, en matériau élastomère tel que le caoutchouc.

Arrivant en fin de course du convoyeur 2 à rouleaux 3, les objets 5 tombent. Toutefois, si plusieurs objets 5 de diamètres différents sont alignés dans une rangée d'objets 5 entre deux rouleaux 3 adjacents, ceux de plus grand diamètre pourraient tomber avant ceux de plus petit diamètre. Pour éviter cet inconvénient, dans l'unité de tri 1 du mode de réalisation illustré, la flasque oscillo-battante 6 est synchronisée avec le convoyeur 2, de manière à temporairement retenir les objets 5 dans leur chute et ensuite libérer tous les objets 5 d'une rangée de manière sensiblement simultanée.

De la flasque oscillo-battante 6, les objets 5 tombent sur le dispositif 4. Les brosses 9, flexibles et inclinées vers le bas, n'opposent que peu de résistance à la chute des objets 5. Elles les retiennent et empêchent toutefois sensiblement leur rebond dans le sens opposé lorsque les objets 5 arrivent sur les bandes transporteuses 7, comme illustré dans la Fig. 1 a. Les différentes longueurs des brosses 9 permettent de retenir des objets 5 tombants avec une variété de diamètres. Une fois sur les bandes transporteuses 7, les objets 5 sont transportés dans une direction sensiblement perpendiculaire à celle du convoyeur 2. De préférence, la vitesse de transport des objets 5 sur le dispositif 4 est telle qu'ils sont déplacés d'une longueur égale ou supérieure à la largeur du convoyeur 2 à rouleaux 3 dans l'intervalle de temps nécessaire à chaque rouleau 3 pour atteindre la position du rouleau 3 précédent. De cette manière, tous les objets 5 alignés sur une rangée sont évacués dans le sens du transport dans le dispositif 4 avant l'arrivée de la rangée suivante. Une vitesse de transport raisonnable dans une unité de tri de carottes est de l'ordre de 3 m/s.

Ainsi le dispositif 4 transporte les objets 5 en file indienne et à haute vitesse pour leur inspection et tri individuels. Ladite inspection peut par exemple être effectuée de manière automatique avec des capteurs optiques, en particulier dans des unités de vision artificielle. D'autres moyens d'inspection, automatique ou pas, seraient toutefois envisageables par l'homme du métier en fonction des circonstances, ou des applications particulières. Après l'inspection, des moyens d'aiguillage non illustrés peuvent diriger chaque objet 5 dans plusieurs directions alternatives en fonction du résultat de l'inspection. Des tels moyens d'aiguillage peuvent comporter, par exemple, une porte, trappe ou flasque, ou bien un déflecteur ou guide, actionné par des moyens mécaniques, électriques et/ou fluidiques.

Quoique la présente invention ait été décrite en se référant à des exemples de réalisation spécifiques, il est évident que différentes modifications et changements peuvent être effectués sur ces exemples sans sortir de la portée générale de l'invention telle que définie par les revendications. Par exemple, un dispositif de réception et transport tel que le dispositif 4 illustré pourrait être envisagé sans nécessairement l'associer à un convoyeur à rouleaux ou une flasque oscillo-battante tels que ceux illustrés. Aussi, le dispositif pourrait comporter un nombre différent de bandes transporteuses. Il pourrait, par exemple, ne comporter qu'une seule bande transporteuse. Alternativement, il pourrait aussi comporter plus de deux bandes transporteuses, comme, par exemple, trois bandes transporteuses parallèles, arrangées en U. Il pourrait aussi ne comporter qu'une seule courroie-brosse, ou bien d'autres types d'éléments flexibles, tels que, par exemple, des languettes flexibles en lieu des brosses 9. Dans certaines circonstances, ces éléments flexibles pourraient même ne pas se déplacer avec les bandes transporteuses, même si ceci entraînerait un certain frottement avec les objets transportés sur les bandes. Par conséquent, la description et les dessins doivent être considérés dans un sens illustratif plutôt que restrictif.

### REFERENCES DES FIGURES

- 1: Unité de tri
- 2: Convoyeur à rouleaux
- 3: Rouleaux
- 4: Dispositif de réception et transport
- 5: Objet
- 6: Flasque oscillo-battante
- 7: Bande transporteuse
- 8: Courroie-brosse
- 9: Brosse

## Revendications

1. Un dispositif (4) de réception d'objets (5) tombants et de transport desdits objets (5) dans une direction sensiblement différente à la verticale, comportant un ensemble de bandes transporteuses (7) dans la direction de transport, et **caractérisé en ce qu'**il comporte en outre :
- au moins une rangée, sensiblement parallèle à la direction de transport, de plusieurs éléments flexibles (9) attachés à côté et à une certaine distance au-dessus de ladite au moins une bande transporteuse (7), et inclinés vers le bas, de manière à présenter une moindre résistance mécanique à une force orientée vers le bas que vers le haut, chaque rangée d'éléments flexibles (9) étant fixée sur une courroie de transport, de préférence une courroie de transport couplée audit ensemble de bandes transporteuses (7).

2. Un dispositif suivant une quelconque des revendications précédentes, dans lequel chaque rangée comporte des éléments flexibles (9) de plusieurs longueurs.

3. Un dispositif suivant une quelconque des revendications précédentes, dans lequel lesdits éléments flexibles (9) sont en forme de poils de brosse, de préférence en matière plastique.

4. Un dispositif suivant une quelconque des revendications précédentes, comportant au moins une desdites rangées d'éléments flexibles (9) de chaque côté de l'ensemble de bandes transporteuses (7).

5. Un dispositif suivant une quelconque des revendications précédentes, dans lequel ledit ensemble de bandes transporteuses (7) comporte au moins deux bandes transporteuses (7) parallèles, couplées et inclinées latéralement l'une vers l'autre en forme de V.

6. Une unité de tri (1) comportant :
- un convoyeur (2) à rouleaux (3) rotatifs orienté dans une première direction, et
- un dispositif (4) suivant une quelconque des revendications précédentes, placé, avec une direction de transport sensiblement perpendiculaire à ladite première direction, en aval et en dessous dudit convoyeur (2).

7. Une unité de tri (1) suivant la revendication 6, comportant en outre une flasque oscillo-battante (6) entre ledit convoyeur (2) et ledit dispositif (4), synchronisée avec ledit convoyeur (2) afin de sensiblement simultanément laisser tomber sur ledit dispositif (4) toute une rangée d'objets (5) alignés par le convoyeur (2).

8. Une unité de tri (1) suivant une quelconque des revendications 6 à 7, dans laquelle ledit convoyeur (2) à rouleaux (3) rotatifs comporte au moins une flasque flexible, de préférence en matière plastique, disposée au-dessus des rouleaux (3) du convoyeur (2) et orientée sensiblement perpendiculairement à ladite première direction.

9. Une unité de tri (1) suivant une quelconque des revendications 6 à 8, comportant en outre des capteurs pour l'inspection de paramètres physiques et/ou chimiques d'objets transportés par ledit dispositif (4).

10. Une unité de tri (1) suivant une quelconque des revendications 6 à 9, comportant en outre des moyens d'aiguillage d'objets transportés par ledit dispositif (4).

11. Une unité de tri (1) suivant une quelconque des revendications 6 à 10, adaptée pour le tri de fruits ou légumes, en particulier des racines tels que, par exemple, des carottes.

## Claims

1. A device (4) for receiving falling objects (5) and transporting the said objects (5) in a direction substantially different from the vertical, comprising a set of conveyor belts (7) in the transport direction, and **characterised in that** it also comprises:
- at least one row, substantially parallel to the transport direction, of several flexible elements (9) attached alongside and at a certain distance above the said at least one conveyor belt (7), and inclined downwards, so as to present less mechanical resistance to a force oriented downwards than upwards, each row of flexible elements (9) being fixed to a transport belt, preferably a transport belt coupled to the said set of conveyor belts (7).

2. A device according to any one the preceding claims, in which each row comprises flexible elements (9) with several lengths.

3. A device according to any one of the preceding claims, in which the said flexible elements (9) are in the form of brush bristles, preferably made from plastics material.

4. A device according to any one of the preceding claims, comprising at least one of the said rows of flexible elements (9) on each side of the set of conveyor belts (7).

5. A device according to any one of preceding claims, in which the said set of conveyor belts (7) comprises at least two parallel conveyor belts (7), coupled and inclined laterally towards each other in the form of a V.

6. A sorting unit (1) comprising:
- a conveyor (2) with rotary rollers (3) oriented in a first direction, and
- a device (4) according to any one of the preceding claims, placed, with a transport direction substantially perpendicular to the said first direction, downstream of and below the said conveyor (2).

7. A sorting unit (1) according to claim 6, also comprising a rocking/swinging plate (6) between the said conveyor (2) and the said device (4), synchronised with the said conveyor (2) in order to drop a whole row of objects (5) aligned by the conveyor (2) substantially simultaneously onto the said device (4).

8. A sorting unit (1) according to any one of claims 6 to 7, in which the said conveyor (2) with rotary rollers (3) comprises at least one flexible plate, preferably made from plastics material, disposed above the rollers (3) of the conveyor (2) and oriented substantially perpendicular to the said first direction.

9. A sorting unit (1) according to any one of claims 6 to 8, also comprising sensors for inspecting physical and/or chemical parameters of objects transported by the said device (4).

10. A sorting unit (1) according to any one of claims 6 to 9, also comprising means of switching objects transported by the said device (4).

11. A sorting unit (1) according to any one of claims 6 to 10, adapted for sorting fruit or vegetables, in particular roots such as for example carrots.

## Patentansprüche

1. Vorrichtung (4) zum Empfang von fallenden Gegenständen (5) und zum Transport der Gegenstände (5) in eine Richtung, die sich im Wesentlichen von der Vertikalen unterscheidet, die eine Gruppe von Transportbändern (7) in die Transportrichtung umfasst und **dadurch gekennzeichnet ist, dass** sie ferner Folgendes umfasst:
- mindestens eine zur Transportrichtung im Wesentlichen parallele Reihe mehrerer biegsamer Teile (9), die neben und in einer bestimmten Entfernung über dem mindestens einen Transportband (7) befestigt sind und nach unten geneigt sind, derart, dass sie einen geringeren mechanischen Widerstand gegen eine nach unten gerichtete Kraft als gegen eine nach oben gerichtete aufweisen, wobei jede Reihe von biegsamen Teilen (9) auf einem Transportriemen, vorzugsweise einem an die Gruppe von Transportbändern (7) gekoppelten Transportriemen, angebracht ist.

2. Vorrichtung nach dem vorhergehenden Anspruch, wobei jede Reihe biegsame Teile (9) mit mehreren Längen umfasst.

3. Vorrichtung nach einem der vorhergehenden Ansprüche, wobei die biegsamen Teile (9) die Form von Bürstenborsten aufweisen, die vorzugsweise aus Kunststoff bestehen.

4. Vorrichtung nach einem der vorhergehenden Ansprüche, die auf jeder Seite der Gruppe von Transportbändern (7) mindestens eine der Reihen von biegsamen Teilen (9) umfasst.

5. Vorrichtung nach einem der vorhergehenden Ansprüche, wobei die Gruppe von Transportbändern (7) mindestens zwei parallele Transportbänder (7) umfasst, die gekoppelt und einander seitlich in V-Form zugeneigt sind.

6. Sortieranlage (1), die Folgendes umfasst:
- einen Förderer (2) mit Drehrollen (3), der in eine erste Richtung gerichtet ist, und
- eine Vorrichtung (4) nach einem der vorhergehenden Ansprüche, die mit einer Transportrichtung, die im Wesentlichen senkrecht zur ersten Richtung ist, nachgelagert und unterhalb des Förderers (2) untergebracht ist.

7. Sortiereinheit (1) nach Anspruch 6, die ferner zwischen dem Förderer (2) und der Vorrichtung (4) eine Drehkippscheibe (6) umfasst, die mit dem Förderer (2) synchronisiert ist, um im Wesentlichen simultan eine ganze Reihe von durch den Förderer (2) ausgerichteten Gegenständen (5) auf die Vorrichtung (4) fallen zu lassen.

8. Sortiereinheit (1) nach einem der Ansprüche 6 bis 7, wobei der Förderer (2) mit Drehrollen (3) mindestens eine biegsame Scheibe umfasst, die vorzugsweise aus Kunststoff besteht, über den Rollen (3) des Förderers (2) angeordnet und im Wesentlichen senkrecht zur ersten Richtung ausgerichtet ist.

9. Sortiereinheit (1) nach einem der Ansprüche 6 bis 8, die ferner Sensoren zur Prüfung physikalischer und/oder chemischer Parameter von durch die Vorrichtung (4) transportierten Gegenständen umfasst.

10. Sortiereinheit (1) nach einem der Ansprüche 6 bis 9, die ferner Mittel zur Weichenstellung für durch die Vorrichtung (4) transportierte Gegenstände umfasst.

11. Sortiereinheit (1) nach einem der Ansprüche 6 bis 10, die zum Sortieren von Früchten oder Gemüse, insbesondere von Wurzeln wie zum Beispiel Karotten, angepasst ist.
